# EUROPEAN PATENT APPLICATION

(11) **EP 2 851 784 A1**
(43) Date of publication of application: **25.03.2015**
(21) Application number: 12875277.1
(22) Date of filing: 26.04.2012
(51) Int. Cl.: G06F 3/12, G03G 15/00, G06F 11/00

(54) **REMOTE PROGRAM CONTROL DEVICE FOR COPIERS AND PRINTERS**

(71) Applicant: Nube Print SL, 28028 Madrid (ES)
(72) Inventor: SANCHEZ, Antonio, E- 28290 Las Rozas (Madrid) (ES)
(86) International application number: PCT/ES2012/000112
(87) International publication number: WO 2013/160488

(57) **Abstract**

The invention comprises a copier or printer with or without a copier system (referred to hereinafter as a Copier Device or CD) with a program based control system, and the control procedure for a copier or printer with the aim of minimizing the time the CD is inactive due to both the exhaustion of the consumables required and the wear and tear suffered by parts, identifying in advance when this is due to occur and providing this information to the computer person or system requiring the same.

## Description

The invention comprises a copier or printer with or without a copier system (referred to hereinafter as a Copier Device or CD) with a program based control system, and the control procedure for a copier or printer with the aim of minimising the time the CD is inactive due to both the exhaustion of the consumables required and the wear and tear suffered by parts, identifying in advance when this is due to occur and providing this information to the computer person or system requiring the same (user of the equipment or other) in both an individual, in other words, CD to CD, and a plural and centralised manner, that is to say, providing the corresponding information from several CDs in group form.

In accordance with the current state of the art of the same, existing copiers and printers have three main drawbacks in relation to minimising downtime and to programming shutdowns for preventive maintenance. Although rare, there are cases of CDs featuring a program based control for consumables and in exceptional cases for the parts involved. Such control is conducted in accordance with the amount of consumables remaining, not taking into account the rate at which the equipment is used, thus resulting in a large amount of downtime due to a shortage in the supply of consumables and parts, this being the first drawback presented. The most common case of existing program-based control is that where the CD features LEDs which indicate the level of the consumable is low. The LED lights up, flashes or changes colour, normally to red, as a response to the sensor displaying the level of the consumable (toner, for example) after having dropped below the pre-programmed level. Other less common but well-known cases involve the CD featuring a display or screen which shows the approximate level of the consumable expressed as a percentage and an alert intended for the user indicating when the level of a consumable has dropped below the pre-programmed level. This level is independent of the workload of a printer, reason for which in the vast majority of cases it lights up too late to order a replacement before the CD stops working, or too early, remaining lit up for weeks or months, thus losing any usefulness in relation to proactivity and assistance with regard to the maintenance of the CD. Due to the fact the sensor alert level is not reprogrammable, the problem in question cannot even de dealt with manually, and as such the urgency the detailed program-based control is designed to show loses all real usefulness.

Similar to that stated in the previous paragraph with regard to the consumables used by a CD to execute the physical task of printing on a medium, an ordinary or professional-use printing device comprises parts which are subjected to wear and tear and the service life of which is measured by the manufacturer in terms of numbers of prints made or scans performed. This leads us to the second drawback, which consists of the fact that the inability to foresee the fatal wear and tear or breakage of a part means the CD will remain inevitably inactive until the arrival of a technician with the corresponding part. These cases are in fact more serious for the owner or user of a CD, as the stock available in the supply channel for this type of parts is extremely limited, reason for which the downtime may run into days or even weeks.

There is a third problem besides the current state of the art in relation to the management of "fleets" of CDs. Over the last 20 years information technology has become global and can be found not only in leading offices, but in the most diverse professional jobs (for example: automobile workshops, quarries or any other trade we would never imagine was a place in which a computer would have an obvious use), homes, automatic machines (such as ATMs, train and plane ticket dispensers, etc.), in brief, anywhere at all. As a result of all this the same person interacts throughout the day with several different copiers or printers (for example: with the printer at home and the copier and printer in the office or business). The management of the maintenance the individual performs on this equipment is, however, limited to pre-programmed alerts in CDs, as we mentioned previously. The current state-of-the-art does not provide a user with the possibility of getting to know the technical condition of all his equipment in a simple and centralised manner, in other words, there is no possibility of a user discovering, at any given time and place, the state of wear and tear of the consumables and parts of the CDs of which he is charge, and the need to replace the same in a timely manner.

Based on this well-known state-of-the-art, the invention aims to provide a well-known CD with a program-based remote control system which significantly improves the method of supply by basing it on the time (expressed in days or any other unit of time) a specific consumable or part of the CD has left before it runs out or reaches the end of its service life, thereby bringing the CD to a halt, reducing the real cost of use, in addition to rendering the management of the CD more efficient due to the fact less resources will be dedicated to these tasks.

The invention is geared to the possibility of improving the systems of a known CD by providing it with the ability to capture sufficient data with regard to the wear and tear of the consumables and parts of the CD, and whereby the program based control will process the information and provide warnings for the need to replace a consumable or part in accordance with the time remaining before the end of its service life.

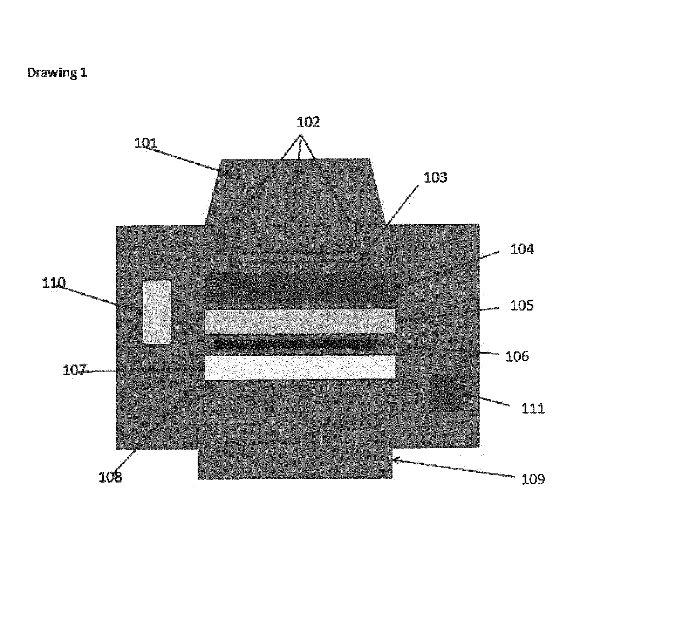

Drawing 1 illustrates a standard market CD. The main components of the same are listed. The invention would provide the CD with the appropriate sensors whenever they are not already available in the current state-of-the-art. Based on Drawing 1, the standard operational functions of a CD and the sensors which would be involved in the invention are specified below. The medium to be printed upon is dragged in by the feed rollers (102) from the input tray (101). A sensor located on the rollers (102) indicates if the medium has not been introduced, or in other words, if the apparatus is turning with nothing in it. Another sensor indicates if one of the rollers is not turning, or in other words, if it has become stuck. Once the medium has been introduced to the CD the process which is common to most CDs commences. The sensors located on the different parts susceptible of wear and tear transmit the information on the condition of use of each one. The following are the most common in market CDs: the laser (103), the cartridge containing the consumable toner or ink (104), the transfer or photoconductor container belt (105), the fuser (107), the waste consumable container (108). A sensor located in the internal motors (110) indicates the number of revolutions made, and another sensor at the entrance to the output tray (109) indicates that the printed medium has been completely ejected from the print cycle. The program based control of the invention has its own resources of processor, memory, buses and interfaces, which enables it to use specific monitoring protocols (SNMP) to access the sensors via the main native processor the CD features.

The solution to the aforementioned problems using the invention is characterised in that it provides the CD with a series of additional sensors to those existing in the state of the art, which together with the existing sensors obtain the measurement of the data in relation to the level of the consumable, the print counter, feed blocks (of the medium printed upon such as paper, cards, CDs and others, or other supplies which form part of the end product such as clips and others) and the different errors detected by the equipment, in addition to the date and time at which these measurements are taken. This measurement is taken at a pre-programmed interval and is adaptable to each specific case. These additional sensors are installed in the CD and connected directly to the program based control.

A more economical alternative than the installation of additional sensors in the CD is the use of the values provided by the existing sensors (which are accessed as described in the previous paragraph) to determine the values required for the correct operation of the program based control constituting the invention. As such, on a regular and automatic basis and at a pre-programmed interval, the program based control itself reads the values of the existing sensors and uses standard mathematical equations to calculate the value of the level of the consumable or part at any time. This value is filed in the program based storage system and used subsequently to determine the remaining service life of the consumable or part, as described previously. This alternative involves a clear improvement in the functioning of native sensors in many market CDs, those which display the level of the consumable or part imprecisely (for example: toner level 100%, over 75%, over 50%, over 25% and low; Example 2: toner level displayed in intervals: 100%, 90%, 80%, 70%, 60%, 50%, 40%, 30%, low), as well as a simple status such as "correct level" and "low level" (for example: toner OK, toner low), enabling us to ascertain the level of the consumable or part with acceptable accuracy. This represents a clear advantage when the level of the consumable or part is nearing the bottom, as it enables us to identify the appropriate time to replace the item with greater accuracy, using the resources to the full and thereby reducing the operational costs of a CD by up to 30%.

Unlike existing models, the invention is designed to register the data provided by the sensors or which has been pre-processed on a memory in accordance with the alternative described, in such a way that creating a sequence of data. A program based control installed in a CD (control module 111 in Drawing 1) conducts a regular relation between the different data gathered and registered on the memory as a means of enabling us to estimate the date on which each consumable is likely to run out, and which may also be expressed as the service life remaining prior to being replaced.

With regard to the wear and tear of both parts and consumables, a replacement sensor for the part in question is added to the existing sensors. The value given by the sensor indicates that this part has been replaced by another and this is registered on a memory together with the values of the sensors of the different counters and levels and the date and time of the capture of such values, remaining there while a sequence of data is created. This replacement sensor may be incorporated into the program based control, thereby avoiding the increased cost of installing a physical sensor in the CD or in the part or consumable. One alternative the invention provides is that the data indicating the replacement of a part may be placed in the program based control manually. In both cases the data is registered on a memory together with the different counters and consumable levels and the date and time at which the said data is captured, the series of registers forming a sequence of data. A program based control installed in a CD (control module 111 in Drawing 1) conducts a regular analysis of the different data gathered, and as such estimates both the level of wear and tear to the part in question expressed as a percentage, or the number of prints, motor or roller revolutions, or number of scans, in addition to the date on which the part should be replaced, a. and which may also be expressed as the service life remaining prior to being replaced.

The CD enhanced by the invention registers a significant reduction in the length of time for which the device is inactive due to issues involving maintenance or repair. The invention clearly displays the time a specific consumable or part has remaining before wear and tear brings the equipment to a halt. The invention is designed to display this information in the form of an alert on the screen or display of the CD, accessing the corresponding menu, and which under the invention would preferably be named "Levels" or "Replacement Dates". In accordance with the capacity of the CD screen, the data in relation to the replacement time for each consumable or part would be displayed one at a time or several at the same time, in the order furthest from to closest to their estimated replacement date.

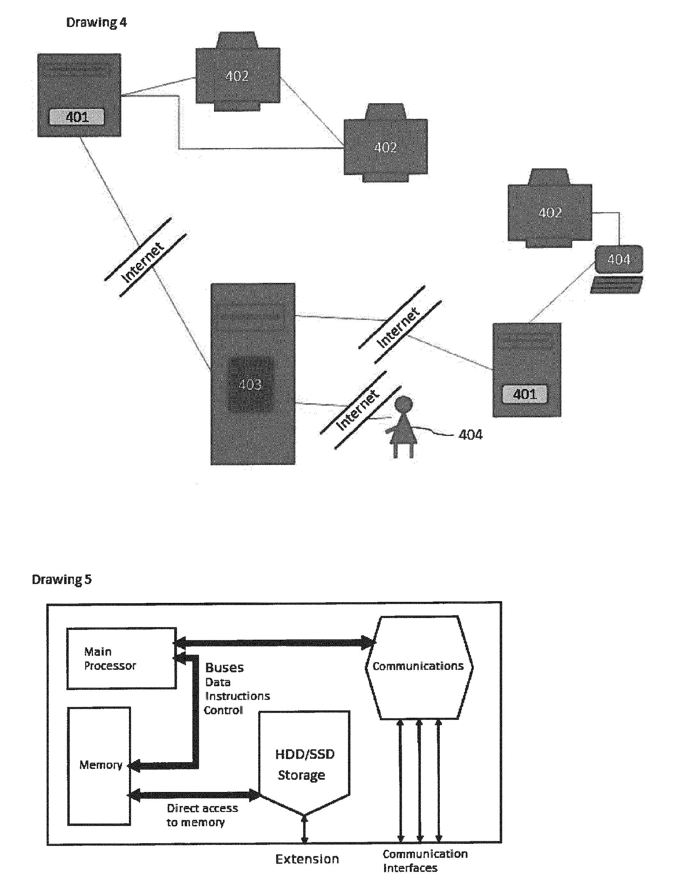

The preferred form of execution involves the control system located in a remote place separate from the CD, in other words, on a platform external to the CD. The values collected from the different sensors in the CD are sent to the control system installed in a remote location by means of a standard data collection device, which could be a PC equipped with a data collector or an electronic system designed for such a purpose. The delivery of the data collected by means of the different sensors installed in the CD and the manner in which this is conducted depends on the aforementioned data collector. The connection between the program based control and the CD sensors is established via the network using the data collection device just as if it were located in the body of the CD itself, and using the same mechanisms. The program based control does not intervene until the said data has been received. The data is then memorised in order to create a sequence of data. A program based control installed in a CD conducts a regular analysis of the different data gathered and registered on the memory as a means of enabling us to estimate the date on which each consumable is likely to run out, and which may also be expressed as the service life remaining prior to being replaced. The invention is designed to conDrawing the program based control to enable the general condition of consumables and parts to be viewed by the people or systems entrusted with the management of the CD regardless of where they are. The latter option of implementation is more beneficial than the former due to the fact the program based control located in the CD provides additional advantages. First of all, the CD does not require a display or screen, resulting in lower implementation costs, and it can be standardised for practically all the CDs on the market. Drawing 4 illustrates an example of what the scheme for each component of the solution would be like. The print devices (402) may be accessed via a network (LAN/WAN, for example) connected to the collection device, or where necessary, via the use of agent systems (404) designed to recover the information from each CD independent of the network and forward them to the collection device (401). These agents are implemented as a reduced version of the main collection equipment (401), and may therefore form a network of collection equipment. Once the data has been captured, packaged either partially or in a single block, it is transferred to the remote equipment in which the program based control is installed (403). This transfer is conducted via the most suitable channel in accordance with the type of architecture of the installation network, for which we recommend the Internet itself using the security criteria required such as the design of a private virtual network. There may exist a bidirectional communication between the platform with the program based control and the collection devices in order to perform updates in real time, requests for sensor level readings on demand, remote control and added-value services.

Program-based control consists of a device with at least one processor, a rapid memory module to support the processor (cache, random access memory), a non-volatile storage device and a general communications model with the communication interfaces required for the installation (Ethernet, for example). Drawing 5 illustrates the scheme regarded as most suitable for the invention.

In the implementation of the invention where the control based system resides outside the CD, the data collected from the different sensors is transferred by means of the collection device (Drawing 4, 401) to the external platform (403) on which the program based control is installed and all the supply procedures and methods are executed. Information on "levels" or "replacement dates" is displayed to the user or interested party by means of universal access via the Internet (or local network), allowing for access to this important information regardless of whether the CD is physically nearby, (Drawing 4: 404). This variation of the invention involves bidirectional communication between the program based control and the user. This is both possible and simple in practice as the user will access the program based control using a standard communication interface preferably via the Internet (or local network), or any other existing browser. This bidirectionality should enable the user to interact with the program based control in order to adapt the same to his specific needs. This should enable the user to group his CDs within the program based control, to introduce parameters which enable him to unmistakably identify the CDs with the data with the location or references given to the same, in addition to altering the alert levels which will determine the warning generated by the program based control in relation to the need to replace a certain consumable or part, request current data on the value of a specific sensor or conduct general checks. As such, the single identification of the user (404) on accessing control system will show him all the CDs and the technical condition of each one, regardless of the geographic position of the same. A preferred method of execution involves the program based control showing the user the following when accessing with the right to connect: a single identifier for the CD (either the serial number or MAC address will be used), the model of the CD, the customised description of the same and the physical location the user has assigned to it, the level of each of the consumables expressed as a percentage, the amount of time each consumable has left prior to foreseeable exhaustion, the average length of time in terms of days and prints each consumable replacement will last for, the estimated replacement date for parts susceptible to wear and tear, the values of the different use counters such as the total number of prints, colour prints, black and white prints, scans, and the level of the hard disc of the CD expressed as a percentage of use in relation to the total capacity and amount of free space, the values displayed on the virtual and real screens of the CD and, in general, any other parameter collected from the print device sensors by means of the aforementioned procedure.

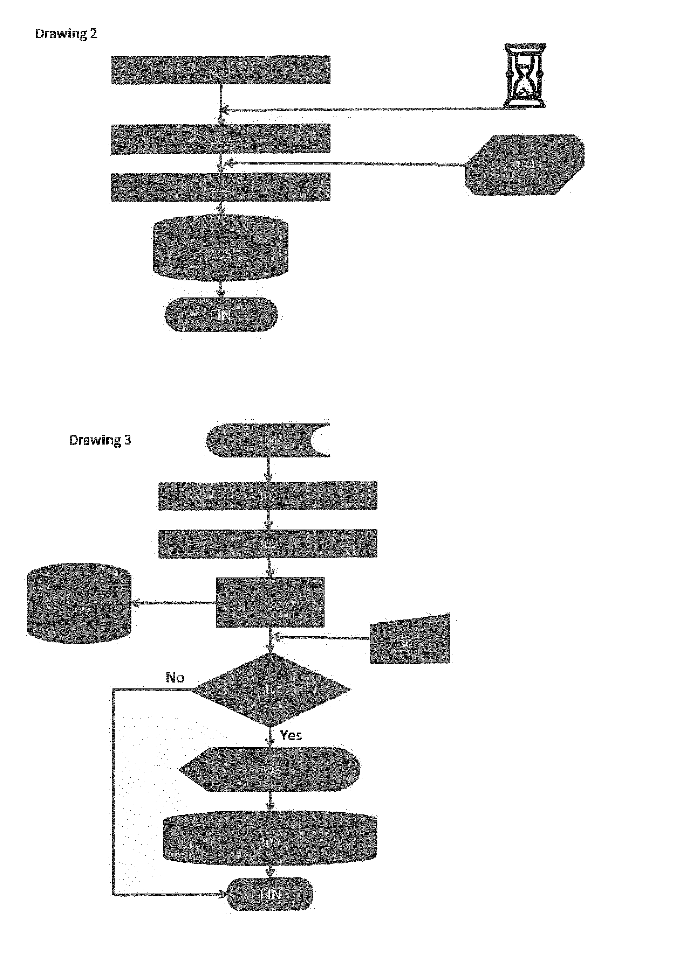

Drawing 2 illustrates the preferred procedure for the capture and storage of level readings. Each consumable or part the user wishes to monitor is susceptible of generating an event. An event is a consumable level remaining for that consumable, or the life level remaining for a part. The value of each of the sensors is registered on a regular basis (201). The date and time of the reading is also registered (202), as are the values provided by the sensors monitoring the number of prints and/or scans conducted (203) thanks to the information provided by the print and scan sensors (204). All this data is stored in a non-volatile memory for subsequent analysis (205).

The smooth operation of the invention requires the presence of at least two records to generate each of the events. This means what is required is at least two records of, for example, black toner level in order to indicate the estimated date for the replacement of the black toner. Drawing 3 illustrates the preferred manner of executing the monitoring procedure for the replacement of the consumables and parts of the CD. The data registered (301) in accordance with Drawing 3 is now analysed (302) using a logic method programmed in the program based control. The logic method is conducted consumable by consumable or part by part, which we will call an element. Each element is unique to a specific CD, whereby a CD may feature as many elements as the manufacturer has specified. As explained when describing Drawing 2, the following data will be collected for each CD, comprising a record which is then filed in the storage model (Drawing 5, HDD/SDD): the level of the element displayed by the sensor or the value of the counter measuring the service life of the same, the values of the print and scan counters, the date and time at which the reading was taken. When at least two records exist for each element, a pre-programmed logic system recovers the series of records for the element (data stack) and using standard mathematical models estimates the level or service life of the element in the future based on the known evolution of the same up to now (and registered in the data stack). It should be pointed out that as the data stack will grow in accordance with the number of readings taken, the forecast or estimate of the level or counter data will be increasingly adjusted, or in other words, there will be a lower deviation. The program based control now has the value of the estimated time at which the service life of the element will end. This value is registered and associated with a specific date and time, and constitutes an event involving the consumable or part in question (304), all of which is stored (305) in a non-volatile memory. The user may now access the event using the user interface or by means of the buttons located on the CD and browsing through the menus. With the aim of facilitating work involving the estimation of CD supplies to the maximum, the event may be expressed as the time the element in question has left before its service life comes to an end, or as a date on which its service life is expected to end (303). A parameter which is introduced manually and associated with each of the possible events is the early warning time (306). The process based control compares the value of the early warning time with that of the event and determines in the event the former is greater than the latter whether or not a warning for the replacement of the corresponding consumable or part should be launched (307). In the event it does, the warning is shown directly by the program based control and displayed on the CD screen, or on the user screen involved when the program based control is not located in the CD itself (308). The warning is stored (309) in a non-volatile memory. When the program based control is installed on a remote platform independent of the CD, an additional variant enables the warning to be sent directly to the user identified for this CD. Via the communication interface (Drawing 5) included in the program-based control, the warning is formatted, packaged and transferred by means of a standard communications interface serving as a connector for the purpose (electronic mail, SMS, IMS, Twitter, etc), always taking into account that this is a machine-person communication and that the message is legible and understandable (language) to the user receiving the same. Furthermore, a machine-machine communication is included to feed an external system for the supply of parts and consumables.

## Claims

1. A program based Control Device which stands out due to the fact it is installed in a copier or printer with or without a copier system (referred to hereinafter as a Copier Device or CD), composed of at least a processor, a rapid memory module supporting the processor, a non-volatile storage device and a standard communications module for the communication interfaces required, which demands and receives data from the different sensors of the Printing Device, using specific monitoring protocols (SNMP) to access the same via the principal native processor installed in the CD, which it uses to enable a computer program resident in the program based control memory or in its storage system and executed by the main processor to determine the estimated remaining service life of each consumable or part of each copier or printer; and to transfer to the user or any interested party such information by means of alerts via the authorized channels on the corresponding communications interfaces such as the CD screen itself or as an extension to the http(s) server and accessible from a browser.

2. A control procedure for the supply of consumables and parts for copiers and printers with or without a copier system (referred to hereinafter as the Printing Device), which stands out due to the use of the data supplied by the sensors installed in the same and/or in the consumables or parts themselves and obtained using specific monitoring protocols (SNMP) by means of the main native processor installed in the Printing Device, with the aim of determining the approximate remaining service life of each consumable and/or part and/or the approximate date on which each consumable or part is due to be exhausted, alerted by means of one of more communication interfaces to the person or external computer system entrusted with the management of the supply of consumables or parts to the person or external computer system entrusted with the management of the supply of the consumables or parts or in some way interested in the information, to enable the implementation of the procedure to replace the corresponding consumable or part in a proactive and timely manner.

3. A program based control in accordance with claim 1 which stands out due to the fact it emulates the data from the sensors which the copier or printer with or without a copier system (referred to hereinafter as Printing Device) lacks, by means of the determination of the same using data obtained from the Printing Device sensors, and executing regular and automatic standard mathematical equations on a pre-programmed basis to determine the level of a consumable or part at any time. This value is filed in the program-based storage system and used subsequently to determine the remaining service life of the consumable or part, as described in claim 1.

4. A program based control in accordance with claim 1 which stands out due to the fact it is installed outside the copier or printer with or without a copier system (referred to hereinafter as the Printing Device), and which receives the data of the levels of the sensors of the same by means of a standard data collection device, conducting the connection between the program based control and the sensors via the network using the data collector as if it were installed within the physical housing of the Printing Device, whereby the program based control receives data from a number of different Printing Devices, executing the control tasks described in claim 2 for each and every one of the same.

5. A program based control in accordance with claim 4 which stands out due to the fact it features bidirectional communication with the collection devices for the execution of real time updates to the copier or printer with or without a copier system, such as the capture of data from the sensors at a specific time, changes in the pre-programmed parameters of the collection devices or updates of the same.

6. A program based control in accordance with claim 4 which stands out due to the existence of bidirectional communication between the program and the person or computer system at the time of reporting levels in relation to the duration of consumables and parts, thereby allowing for changes to the pre-programmed parameters of the program based control.

7. A program based control in accordance with claim 4 which stands out due to the fact it enables the identification of a user for each copier or printer with or without a copier system or for a series of the same, and this user may interact with the program based control by means of a standard safe connection, preferably via the Internet or a local network to receive the alerts in relation to the consumable or part to be replaced in the near future, and/or to view the status of each consumable or part per printer or copier expressed in terms of remaining service life time, as for any other parameter collected from the sensors of the Printing Device using the procedure mentioned in claim 1, including the values of the number of prints taken, the levels of the different consumables or parts displayed on the virtual and/or real screens of the Printing Device in question.

8. A program based control in accordance with claim 4 which stands out due to the fact additional data may be associated with each copier or printer, enabling the unequivocal identification of the same by the user or external system such as the equipment location address and/or an identification reference for the same.

9. A copier or printer with or without a copier system (referred to hereinafter as the Printing Device), which stands out due to the fact each consumable or part susceptible to wear and tear features a sensor which sends the data to a program based control housed in the Printing Device itself and which operates in accordance with claim 2.

## Amended claims

### Amended claims under Art. 19.1 PCT

**1.** Device for program based remote control of copiers and printers wherein said device is directly connected to a copier or printer with or without copy capabilities (from now on Copier Device or C.D.), it is detachable and physically independent of the C.D., and its components are at least one processor, a memory module to support the processor, a storage a non volatile storage component and a communications module that includes the needed communications interfaces, and said device requests and receives the data from the different sensors of the C.D. using the specific monitoring protocols (SNMP) to access the C.D. through the main processor embedded in the C.D., and as a consequence it can capture from any C.D. of such characteristics using that protocol the following data:
- serial number and/or MAD address of the C.D.;
- the printer pages counters,
- the level of the consumable/s if available in the C.D.,
- the value of the C.D display and the list of error,
- the serial number of the consumable/s installed in the C.D.,
data that is stored in said device together with the preloaded known durability of each consumable, and is being used by a program resident in the memory or in the storage system of said device and that is executed by the processor to make the device function as:
- consumable need prediction means for predicting an occurrence remaining time for exhaust level for a consumable or a part from the relation analyzed ,
- consumable need prediction means for predicting an occurrence date for exhaust level for a consumable or a part from the relation analyzed,
- consumable need prediction means for predicting the remaining level of a consumable or part from the relation analyzed when such information is not provided by the C.D.,
and makes this information available independently to the C.D. by transmitting using telecommunication interfaces means, such as an extension of the http(s) server included in any web browser, and as a consequence it can be accessed by plural existing and known means such as a PC, smart phone, tablets, smart TVs or any other that is connected to the internet.

**2.** Device for program based remote control of copiers and printers of Claim 1 wherein said device is installed independent and comprises
- telecommunication means to connect to a data collection device or to a data collection agent that is installed in a computer and has means to communicate with an unlimited number of C.D. simultaneously to grab the information from their sensors using the SNMP protocol, and
- consumable need prediction means for predicting an occurrence for multiple C.D. simultaneously using the data grabbed from the device or data collection agent.

**3.** Device for program based remote control of copiers and printers of Claim 1 wherein said device includes bidirectional communication means causing the said device to function as:
- a consumable need situation acquisition means for acquiring information regarding the need for a consumable of a selected C.D.

**4.** Device for program based remote control of copiers and printers of Claim 1 wherein said device includes telecommunication means causing the said device to be accessed from user accounts of known applications such as Twitter, MySpace, Facebook, Twenty, WhatsUp or similar using http(s) protocol causing said device to
- respond by outputting the said consumable need prediction information predicted by the consumable need prediction means,
- respond by outputting the information captured from the C.D. and stored in the said device.

**5.** Device for program based remote control of copiers and printers of Claim 3 wherein said device has at least one user pre-identified for each C.D. or group of C.D. and stored using the storage means of said device, and has data manual input means that cause the said device
- to use the data input manually to alter the predictions for consumer needs generated by the consumable needs prediction means using the consumable needs prediction means of said device.

**6.** Method for Program based remote control of copiers and printers for use in a device that is composed by at least one processor, a high speed memory that provides support to the processor, a storage device a non volatile storage component and a communications module that includes the needed communications interfaces, with which it requests and receives the data from the different sensors of the C.D. using the specific monitoring protocols (SNMP) to access the C.D. through the main processor embedded in the C.D., to collect the data including the counter of pages printed, the level of consumables when available, wherein the method comprises:
- consumable need prediction step of predicting an occurrence remaining time for exhaust level for a consumable or a part of the C.D. from the relation analyzed ,
- consumable need prediction step of predicting an occurrence date for exhaust level for a consumable or a part of the C.D. from the relation analyzed,
- consumable need prediction step of predicting the remaining level of a consumable or part from the relation analyzed when such information is not provided by the C.D.,
- consumable need prediction notification step of notifying the consumable need prediction time, date and remaining level as predicted in the said consumable need prediction step.

**7.** Method for Program based remote control of copiers and printers of claim 6 wherein such method is used when the C.D. do not have sensors that show the level of the consumables and comprises:
- a reception step of receiving a manual input with the notification of a change of the consumable that the said method uses to reset its consumable needs predictions by using the known durability of the consumable, the new install date input and the number of pages printed that is collected from the C.D.

**8.** Method for Program based remote control of copiers and printers of claim 6 wherein such method is used in those C.D. that do not have a sensor to count for the pages printer and as a consequence do not provide the value for said counters, comprises:
- a reception step of receiving manual input with the printed pages counters loaded from a user that has been previously registered as such in the program based control and that is using as mean of communication third party applications that have user identification protocols such as Twitter, MySpace, Facebook, Twenty, WhatsUp or similar,
- a reception step of receiving manual input with the printed pages counters loaded from a user that has been previously registered as such in the program based control and that is using as mean of communication thext message (SMS) protocol.

**9.** Method for Program based remote control of copiers and printers of claim 7 wherein such method comprises:
- a reception step of receiving manual input coming from a user that has been previously registered as such in the program based control and that is using as mean of communication third party applications that have user identification protocols such as Twitter, MySpace, Facebook, Twenty, WhatsUp or similar,
- an output step of sending consumable need prediction info to the user that has been previously registered as such in the program based control and that is using as mean of communication third party applications that have user identification protocols such as Twitter, MySpace, Facebook, Twenty, WhatsUp or similar.

**10.** Method for Program based remote control of copiers and printers of claim 7 wherein such method comprises:
- a reception step of receiving manual input coming from a user that has been previously registered as such in the program based control and that is using as mean of communication the text message (SMS) protocol,
- an output step of sending consumable need prediction info to the user that has been previously registered as such in the program based control and that is using as mean of communication the text message (SMS) protocol.
